**Europäisches Patentamt**

**European Patent Office**

**Office européen des brevets**

(19)

(11) Veröffentlichungsnummer: **0 328 695**

**A1**

# (12) EUROPÄISCHE PATENTANMELDUNG

(21) Anmeldenummer: **88102128.1**

(22) Anmeldetag: **13.02.88**

(51) Int. Cl.4: **B23K 11/26 , B23K 1/20**

(43) Veröffentlichungstag der Anmeldung:
**23.08.89 Patentblatt 89/34**

(84) Benannte Vertragsstaaten:
**AT BE CH DE ES FR GB GR IT LI LU NL SE**

(71) Anmelder: **König Metallwarenfabrik GmbH**
**Industriestrasse 3**
**D-6470 Büdingen 1(DE)**

(72) Erfinder: **König, Harry**
**Gärtnerweg**
**D-6472 Altenstadt(DE)**

(74) Vertreter: **Munderich, Paul, Dipl.-Ing.**
**Frankfurter Strasse 84**
**D-6466 Gründau-Rothenbergen(DE)**

(54) **Verfahren zur Herstellung von Schweissverbindungen zwischen Metallen gleicher oder unterschiedlicher Schmelzstemperaturen.**

(57) Die Erfindung betrifft ein Vefahren zur Herstellung von Schweißverbindungen zwischen Metallen, insbesondere unterschiedlicher Schmelztemperaturen. Ein solches Verfahren wurde durch den berichtigten Neudruck der 13. Auflage, Bd. 1, Seite 645 als Kondensatorstoßentladungs-Schweißverfahren bekannt. Weiterbildungen dieses Verfahrens haben die Möglichkeit erschlossen, Messing- und Stahlverbindungen mit hoher Festigkeit zu erreichen, wobei im Interesse der Vermeidung der Reduzierung von Gefügeverschiebungen in der Legierung möglichst niedrige Schweißzeiten festgelegt wurden.

EP 0 328 695 A1

### Verfahren zur Herstellung von Schweißverbindungen zwischen Metallen gleicher oder unterschiedlicher Schmelztemperaturen

Die Erfindung betrifft ein Verfahren zur Herstellung von Schweißverbindungen zwischen Metallen gleicher oder unterschiedlicher Schmelztemperaturen, wobei bereits bei Annäherung und im weiteren bei der Zusammenführung der miteinander zu verbindenden Teile durch transformierte Entladung eines Kondensators die Einstellung der Schmelztemperatur des höher schmelzenden Metalles in beiden Teilen ermöglicht wird, und, bei Berührung der zu verbindenden Bereiche, ein quasi einheitliches Schmelzflußbett in beiden Teilen entsteht, dessen Volumen im wesentlichen durch die Energie, die Elektrodenkraft (Schweißdruck) und die Entladungszeit (Schweißzeit) des Kondensators bestimmt wird.

Ein solches Verfahren ist durch Dubbel, berichtigter Neudruck der 13. Auflage, Band 1, Seite 645 bekanntgeworden.

Im Rahmen der dort gegebenen Schilderung der Schweißverfahren ist unter der Gruppe 8 - Preßschweißen - und als Punkt c) das Kondensatorenstoßentladungsschweißen genannt.

Hier heißt es stichwortartig:

"Erzeugen der Schmelzwärme durch bei Annäherung der Werkstücke sich entladender Kondensatoren. Verbinden der Teile im Schmelzfluß unter Beibehaltung des Anpreßdruckes bis zum Erstarren dem Schmelzbades.

Konzentrierte Wärmezufuhr mit geringer Wärmeableitung, daher auch Verschweißen von Teilen mit sehr "unterschiedlichen Schmelztemperaturen" möglich."

Dieses, erst während des zweiten Weltkrieges entstandene Verfahren wurde in den anschließenden Jahren vorwiegend für die Verschweißung dünner Bolzen und Stifte auf dicken Blechen und für das Stumpfschweißen von Drähten verwendet. Die laufend weiter betriebene Entwicklung führte zu Kondensator-Impulsstoßentladungs-Schweißmaschinen mit vielseitiger Anwendung, so daß das Verfahren, insbesondere aus der Elektro- und Feinwerktechnik, heute nicht mehr wegzudenken ist.

Die älteren Kondensatorentladungs-Schweißmaschinen arbeiten dabei mit einer sehr langen Entladungszeit, die bis zu 1/10 sec. andauern kann. Diese Technik hatte in Verbindung mit den damals sehr ausgeprägten Netzspannungsschwankungen den Nachteil einer oft schlechten Schweißqualität, da diese Schwankungen im Quadrat wirksam werden.

Aus diesem Grunde hat sich die einschlägige Industrie, z.B. die aus der Geräteentwicklung DANZIG GmbH hervorgegangene Impuls-Physik-GmbH, Hamburg, mit Erfolg stark engagiert, und die Schweißzeiten - verglichen mit den vorher üblichen -im Verhältnis bis 1 : 36 gekürzt und die Netzbelastung im Verhältnis von ca. 1 : 3 reduziert.

Diese Ergebnisse der Entwicklung finden u.a. ihren Niederschlag in den sogenannten Ultra-Impuls-Schweißmaschinen, die für Verbindungen Stahl-Stahl extrem niedrige Schweißzeiten von 1,2 bis 6 ms vorsehen.

Gutleitende Verbindungen verschiedener Werkstoffe können längere Schweißzeiten erfordern, die im Extremfall bis zu 25 ms betragen können, wobei schon im Interesse einer Temperaturbegrenzung der Schweißstücke mit einer möglichst kurzen Entladungszeit gearbeitet werden sollte.

Besondere schweißtechnische Anforderungen stellt die hierbei zu behandelnde Aufgabe, Messing und Stahl zu verbinden. Sie beinhaltet nicht nur die Verbindung von zwei Werkstoffen, sondern im Grunde genommen von drei Stoffen, da die Legierung Messing neben ca. 60 % Cu und 0,5 % Pb knapp 40 % Zn enthält.

Die Legierung wird also im wesentlichen aus zwei im Verhältnis 3 : 2 zusammengeführten Metallen gebildet.

Bedenkt man noch, daß Messing lediglich bis zu einem Zn-Anteil von höchstens 37 bis 40 % löslich ist, und hier sogenannte alpha-Mischkristalle bildet, während ein über diesem schmalen Bereich liegender Zn-Anteil zu einem heterogenen (alpha-beta-Kristalle) Gefüge führen kann, so sind, im weiteren Zusammenhang mit der Tatsache, daß sich eine Reihe von Messingqualitäten im Bereich dieser Grenzen bewegen, Schwierigkeiten zu erwarten, die der Herstellung qualitativ einheitlicher Schweißverbindungen entgegenstehen können.

Eine Einschränkung des Risikos ist zunächst durch Beschränkung der Verwendung von Messingqualitäten mit einem Zinkanteil von gleich oder geringer 40 % gegeben. Eine Legierung, wie Ms 56 (CuZn44Pb2) sollte z.B. nicht zu den "verschweißbaren Qualitäten " gerechnet werden, da zumindest die Gefahr besteht, daß das Gefüge eine Reduzierung seines Zinkgehaltes während der Abkühlungsphase erfährt und diese Verschiebung sich in mehr oder weniger starken Spannungen in der Schweißnaht niederschlagen kann.

Da auch der unmittelbare Bereich,d.h. Legierungen mit 40 % Zn - bei geringen Abweichungen von der vorgeschriebenen chemischen Zusammensetzung -, fallweise zu Störungen führen können, sollte die Schweizeit·so kurz als möglich gehalten werden können, um eventuellen Gefügeänderungen, deren Ablauf auch Zeit bedarf, einen möglichst geringen Spielraum zu geben.

Dies berücksichtigend ist es zusammenfassend Aufgabe dieser Erfindung, ein Verfahren zur Herstellung von Schweißverbindungen nach der eingangs beschriebenen Art zu nennen, das die o.g. Mängel und Bedenken weitgehend einschränken kann.

Die erfindungsgemäße Lösung dieser Aufgabe sieht vor,

daß zur Verbindung eines Messingteiles mit gleich oder geringer 40 % Zn und einem bis zu 0,2 % C enthaltenden Stahlteiles (St 37/37), die für Stahlverbindungen bei einer fest eingestellten, kürzestmöglichen Schweißzeit erforderlichen Schweißwerte hinsichtlich Energie und Elektrodenkraft lediglich max. zu etwa 90 % beansprucht werden.

Hieraus ist zu erkennen, daß sich die Verbindung auf Messing mit einem ausreichend niedrigen Zn-Gehalt und einen normalen Stahl bis zu 0,2 % C bezieht, wobei im Hinblick auf die Empfindlichkeit der Legierung gegenüber Abweichungen der chemischen Zusammensetzung eine die Tendenz zu möglichen Gefügeänderungen dämpfende, optimal kurze Schweißzeit ermittel wurde, wobei diese Zeit umgekehrt die elektrische und thermische Leitfähigkeit der zu verbindenden Werkstoffe zu berücksichtigen hat.

Im Rahmen dieser verschiedenen Durchschnittsversuche wurde erkannt, daß gegenüber üblichen Verbindungen Stahl/Stahl, bei einer fest eingestellten Schweißzeit, Schweißwerte üblich sind, die hinsichtlich Energie- und Elektrodenkraft erkennbar niedriger liegen.

In Weiterbildung des Verfahrens wurde die Schweißzeit auf 14 ms konstant eingestellt und dabei festgestellt, daß die Elektrodenkraft im Bereich des 0,35 bis 0,65-fachen und die Schweißenergie im Bereich des 0,65 bis 0,9-fachen Wertes, jeweils bezogen auf die Stahl-Stahl-Vergleichsschweißung, liegt.

Die Verbindung eines Bolzens mit 7 mm Durchmesser aus Ms 60 mit 3 mm Blech der Qualität St 46-2 vollzieht sich durch Kantenschweißen mit der 0,5-fachen Elektrodenkraft und der 0,8-fachen Schweißenergie, bezogen auf die Stahl-Stahl-Vergleichsschweißung.

Die Schweißergebnisse sind dabei voll befriedigend, so daß die Forderungen der Aufgabenstellung in vollem Umfang als erfüllt betrachtet werden können.

Selbstverständlich sind diese Entwicklungen noch nicht nach jeder Richtung als abgeschlossen zu betrachten; so kann z.B., wie schon heute erkennbar, der Kohlenstoffgehalt des Stahles, zwar mit gewissen Risiken, erhöht werden.

Unabhängig davon ist nach der hier gezeigten Methode und in dem hier ausgewiesenen Rahmen jede Serienfertigung als risikolos zu bezeichnen, wobei das Verfahren für den Armaturenbereich, insbesondere für die Ausstattung der oft aus niedrig gekohlten Stählen gefertigten Gehäuse mit Präzisionsführungen, Sitzen, Ventilteller oder dgl. besonders vorteilhaft ist.

Das erfindungsgemäße Verfahren soll durch das nachstehende Beispiel näher erläutert werden.

Es ist die Aufgabe gestellt, mittels einer Impuls-Entladungs-Schweißmaschine - folgender Auslegung -

| | |
|---|---|
| Schweißenergie - | stufenlos regelbar - von 1.100 bis 4.000 Ws |
| Spitzenstrom | 40 bis 50 kA |
| Schweißzeit - | stufenlos einstellbar - 1,5 bis 20 ms |
| Elektrodenkraft | 100 bis 1.000 kp bzw. 981 N bis 9.810 N |

bei einer vorgewählten Schweißzeit von 14 ms, Bolzen 7 mm Durchmesser, über eine Länge von 1,5 mm, 45° angephast, der Qualität Ms 60 (CuZn 40) , mit einer Blechplatte 3 mm aus St 46-2, durch Kantenschweißen zu verbinden.

Für die Positionierung der Bolzen und deren Verbindung mit der Blechplatte durch eine Ringbuckelnaht sind in der Blechplatte Bohrungen von 5 mm Durchmesser vorgesehen.

Nach einer Reihe von Versuchen hat sich folgende Einstellung als optimal bestätigt:

| | |
|---|---|
| Electrodenkraft | 2.747 N |
| Schweißenergie ca. | 1.200 Ws |

Diese Werte entsprechen etwa der 0,5-fachen Elektrodenkraft und der 0,8-fachen Schweißenergie, wie sie bei Vollzug einer gleichen Schweißung einer Kombination Stahl/Stahl erforderlich sind.

3

**Ansprüche**

1. Verfahren zur Herstellung von Schweißverbindungen zwischen Metallen gleicher oder unterschiedlicher Schmelztemperaturen, wobei bereits bei Annäherung und im weiteren bei der Zusammenführung der miteinander zu verbindenden Teile durch transformierte Entladung eines Kondensators die Einstellung der Schmelztemperatur des höher schmelzenden Metalles in beiden Teilen ermöglicht wird und, bei Berührung der zu verbindenden Bereiche, ein quasi einheitliches Schmelzflußbett in beiden Teilen entsteht, dessen Volumen im wesentlichen durch die Energie, die Elektrodenkraft (Schweißdruck) und die Entladungszeit (Schweißzeit) des Kondensators bestimmt wird, dadurch gekennzeichnet,

daß zur Verbindung eines Messingteiles mit gleich oder < 40 % Zn und einem bis zu 0,2 % C enthaltenden Stahlteiles (St 37/37) , die für Stahlverbindungen bei einer fest eingestellten, kürzestmöglichen Schweißzeit erforderlichen Schweißwerte hinsichtlich Energie und Elektrodenkraft lediglich max. zu etwa 90 % beansprucht werden.

2. Verfahren nach Anspruch 1, dadurch gekennzeichnet,

daß die Schweißzeit auf 14 ms konstant eingestellt ist.

3. Verfahren nach Anspruch 1 und 2, dadurch gekennzeichnet,

daß die Elektrodenkraft im Bereich des 0,35 bis 0,65-fachen und die Schweißenergie im Bereich des 0,65 bis 0.9-fachen Wertes, jeweils bezogen auf die Stahl-Stahl-Vergleichsschweißung, liegt.

4. Verfahren nach Anspruch 1 bis 3, dadurch gekennzeichnet,

daß die Verbindung eines Bolzens mit 7mm Durchmesser aus Ms 60 mit 3 mm Blech der Qualität St 46-2 durch Kantenschweißen mit der 0,5-fachen Elektrodenkraft und der 0,8-fachen Schweißenergie, bezogen auf die Stahl-Stahl-Vergleichsschweißung, sich vollzieht.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | WELDING AND METAL FABRICATION, Band 42, Nr. 4, April 1974, Seiten 125-130, Haywards Heath, GB; F. FRÜNGEL et al.: "Ultra-pulse welding" * Insgesamt * | 1 | B 23 K 11/26 B 23 K 1/20 |
| A | Idem --- | 2-4 | |
| A | DE-A-2 433 648 (TOYOTA JIDOSHA K.K.) * Seite 4, Absatz 1; Seite 6, Absatz 2; Seite 6, Absatz 4; Seite 22 - Seite 23, Zeile 5; Figuren 1,5 * --- | 1,3,4 | |
| A | FR-A-2 190 565 (HILTI AG) * Seite 1, Zeilen 1-32; Seite 11 * ----- | 1,4 | |

RECHERCHIERTE SACHGEBIETE (Int. Cl.4)

B 23 K 11/00

Der vorliegende Recherchenbericht wurde für alle Patentansprüche erstellt

| Recherchenort | Abschlußdatum der Recherche | Prüfer |
|---|---|---|
| DEN HAAG | 24-10-1988 | ARAN D.D. |